# EUROPEAN PATENT SPECIFICATION

(11) **EP 4 057 257 B1**
(45) Date of publication and mention of the grant of the patent: **08.05.2024**
(21) Application number: 21212262.6
(22) Date of filing: 03.12.2021
(51) Int. Cl.: G08G 99/00, H04L 67/12, H04L 67/10, H04L 67/125, H04W 4/44, H04L 67/00

(54) **REMOTE CONTROL METHOD AND APPARATUS, AND VEHICLE**
VERFAHREN UND VORRICHTUNG ZUR FERNSTEUERUNG SOWIE FAHRZEUG
PROCÉDÉ ET APPAREIL DE COMMANDE À DISTANCE, ET VÉHICULE

(30) Priority: 12.03.2021 CN 202110272353
(43) Date of publication of application: 14.09.2022
(73) Proprietor: Guangzhou Xiaopeng Motors Technology Co., Ltd., Tianhe District Guangzhou Guangdong (CN)
(72) Inventor: ZHONG, Zhenchang, Guangzhou (CN); CHEN, Zhijin, Guangzhou (CN); ZHANG, Ming, Guangzhou (CN); LI, Jianmeng, Guangzhou (CN)
(74) Representative: Ran, Handong

(56) References cited:
- CN-A- 108 011 912
- CN-A- 110 535 740
- US-A1- 2019 222 984

## Description

### Field of Invention

The present disclosure relates to the field of automobile technology, and in particular to a remote control method, a remote control apparatus, and a vehicle.

### Background

Service-oriented architecture (SOA) is an architectural pattern that separates different functional units (called services) of an application and combines them via well-defined interfaces and protocols between these services, to allow improved reusability of services, composable business logic, as well as reasonable distributed deployment of each service based on actual use, thereby realizing standardized, high-performance, and highly available services.

With the gradual development of vehicle Ethernet technology, SOA is gradually introduced into vehicle software design. Each domain controller, using an SOA protocol based on Ethernet, independently fulfills corresponding control functions. For example, a vehicle body domain controller fulfills a vehicle body control function; a power domain controller fulfills a power control function; and so on.

A function of a domain controller can be realized by an application running locally in a vehicle. When multiple internal functions need to be exposed to the outside to allow remote control of these functions, multiple local applications of the vehicle need to be modified, which is cumbersome to operate, making it inefficient to realize remote control of the internal functions of the vehicle.

Patent application publication US 2019222984A1 discloses a vehicle including a plurality of controllers configured to communicate over a network and programmed to perform a service by operation of a plurality of routines stored and executed in at least one of the controllers, wherein the vehicle includes a gateway controller in communication with the controllers and programmed to transfer at least one of the routines from a first controller to a second controller responsive to performance data indicating reduced performance of the first controller.

### Summary of Invention

Objects of the present invention are defined in the accompanying independent claims. Preferred embodiments are covered by the dependent claims.

Embodiments of the present disclosure provide a remote control method to improve the efficiency of realizing remote control of a vehicle.

The embodiments of the present disclosure also provide a remote control apparatus and a vehicle to ensure the implementation of the above method.

In order to solve the above-mentioned problems, the present disclosure provides a remote control method, which is applied to a vehicle. A proxy application is deployed in the vehicle. The method includes: acquiring a remote control request received by the proxy application, the remote control request sent by an application in a terminal device using a service-oriented architecture (SOA) protocol; and executing a control operation corresponding to the remote control request.

The executing a control operation corresponding to the remote control request includes: sending the remote control request to a server using the SOA protocol; receiving a first control response message returned by the server using the SOA protocol; and sending a control signal to a corresponding actuator based on the first control response message, so that the actuator executes an operation corresponding to the control signal.

Alternatively, the method further includes: acquiring an execution result of the actuator, and sending, based on the execution result, a second control response message to the application in the terminal device via the proxy application using the SOA protocol.

Alternatively, the sending the remote control request to a server using the SOA protocol includes: sending the remote control request to the server based on a controller area network (CAN) and using the SOA protocol; or sending the remote control request to the server based on Ethernet and using the SOA protocol.

Alternatively, the sending the remote control request to the server using the SOA protocol based on a CAN includes: encapsulating the control request into one or more CAN request messages based on a CAN communication protocol; and sending the one or more CAN request messages to a vehicle communication module via a CAN, so that the vehicle communication module sends the one or more CAN request messages to the server.

Alternatively, the encapsulating the control request into one or more CAN request messages based on a CAN communication protocol includes: encapsulating the control request into continuous first data to be processed based on the CAN communication protocol; and sub-packaging the first data to be processed to obtain a plurality of CAN request messages. Alternatively, the sending the CAN request messages to a vehicle communication module via a CAN, so that the vehicle communication module sends the CAN request messages to the server, includes: sending the CAN request messages to the vehicle communication module in the vehicle by invoking a CAN interface, so that the vehicle communication module sends the CAN request messages to the server.

Alternatively, the first control response message includes a plurality of first CAN response messages, and the sending a control signal to a corresponding actuator based on the first control response message, so that the actuator executes an operation corresponding to the control signal, includes: packaging the plurality of first CAN response messages to obtain continuous second data to be processed; extracting the control signal from the second data to be processed; and sending the control signal to the actuator corresponding to the identification information, so that the actuator executes the operation corresponding to the control signal.

Alternatively, the sending, based on the execution result, a second control response message to the terminal device via the proxy application using the SOA protocol, includes: generating continuous third data to be processed using the execution result; and parsing the third data to be processed to obtain the second control response message, and returning the second control response message to the proxy application, so that the proxy application sends the second control response message to the terminal device using the SOA protocol.

Alternatively, the method further includes: determining whether, among functions currently being controlled locally, there is a function identical to a function requested to be controlled by the remote control request; and executing the step of sending the remote control request to the server using the SOA protocol, if, among the functions currently being controlled locally, there is no function identical to the function requested to be controlled by the remote control request. Alternatively, the method further includes: sending a control request failure message to the terminal device via the proxy application using the SOA protocol, if, among the functions currently being controlled locally, there is a function identical to the function requested to be controlled by the remote control request.

The embodiments of the present disclosure also provide a remote control apparatus, which is applied to a vehicle. A proxy application is deployed in the vehicle. The apparatus includes: a request acquisition module, configured to acquire a remote control request received by the proxy application, the remote control request sent by an application in a terminal device using a service-oriented architecture SOA protocol; and an execution module, configured to execute a control operation corresponding to the remote control request.

The execution module includes: a request sending sub-module, configured to send the remote control request to a server using the SOA protocol; a message receiving sub-module, configured to receive a first control response message returned by the server using the SOA protocol; a signal sending sub-module, configured to send a control signal to a corresponding actuator based on the first control response message, so that the actuator executes an operation corresponding to the control signal.

Alternatively, the apparatus further includes: a response message sending module, configured to acquire an execution result of the actuator, and send, based on the execution result, a second control response message to the application in the terminal device via the proxy application using the SOA protocol.

Alternatively, the request sending sub-module is configured to send the remote control request to the server based on a controller area network (CAN) and using the SOA protocol, or send the remote control request to the server based on Ethernet and using the SOA protocol.

Alternatively, the request sending sub-module is configured to encapsulate the control request into one or more CAN request messages based on a CAN communication protocol, and send the one or more CAN request messages to a vehicle communication module via a CAN, so that the vehicle communication module sends the one or more CAN request messages to the server.

Alternatively, the request sending sub-module is configured to encapsulate the control request into continuous first data to be processed based on the CAN communication protocol, and sub-package the first data to be processed to obtain a plurality of CAN request messages.

Alternatively, the request sending sub-module is configured to send the CAN request messages to the vehicle communication module in the vehicle by invoking a CAN interface, so that the vehicle communication module sends the CAN request messages to the server.

Alternatively, the first control response message includes a plurality of first CAN response messages; and the signal sending sub-module is configured to package the plurality of first CAN response messages to obtain continuous second data to be processed, extract the control signal from the second data to be processed, and send the control signal to the actuator corresponding to the identification information, so that the actuator executes the operation corresponding to the control signal.

Alternatively, the response message sending module includes: a data generation sub-module, configured to generate continuous third data to be processed using the execution result; and a control response message sending sub-module, configured to parse the third data to be processed to obtain the second control response message, and return the second control response message to the proxy application, so that the proxy application sends the second control response message to the terminal device using the SOA protocol.

Alternatively, the apparatus further includes a function determining module, configured to determine determining whether, among functions currently being controlled locally, there is a function identical to a function requested to be controlled by the remote control request. If, among the functions currently being controlled locally, there is no function identical to the function requested to be controlled by the remote control request, the request acquisition module executes the step of sending the remote control request to the server using the SOA protocol.

Alternatively, the apparatus further includes: a control request failure message sending module, configured to send a control request failure message to the terminal device via the proxy application using the SOA protocol, if, among the functions currently being controlled locally, there is a function identical to the function requested to be controlled by the remote control request.

The embodiments of the present disclosure also provide a vehicle, including a memory and one or more programs. The one or more programs are stored in the memory and are configured to be executed by one or more processors to implement the remote control method according to any one of the embodiments of the present disclosure.

The embodiments of the present disclosure also provide a readable storage medium. When instructions in the storage medium are executed by a processor of a vehicle, the vehicle may be caused to execute the remote control method according to any one of the embodiments of the present disclosure.

Compared with the existing technologies, the embodiments of the present disclosure have the following advantages.

In the embodiments of the present disclosure, the vehicle can be provided therein with the proxy application, and a function of the vehicle can be exposed to the outside by the proxy application. The user can send the remote control request to the proxy application via the application in the terminal device using the SOA protocol. After acquiring the remote control request received by the proxy application, the control operation corresponding to the remote control request may be executed. Then, when multiple internal functions need to be exposed to the outside to allow remote control of these functions, it is only necessary to modify the proxy application. This improves the efficiency of remotely controlling internal functions of a vehicle and also increases the scalability of functions of a vehicle.

### Brief Description of Drawings

Fig. 1 is a flowchart of steps of an embodiment of a remote control method according to the present disclosure;
Fig. 2 is a flowchart of steps of an optional embodiment of the remote control method according to the present disclosure;
Fig. 3 is a flowchart of steps of another optional embodiment of the remote control method according to the present disclosure;
Fig. 4 is a flowchart of steps of further another optional embodiment of the remote control method according to the present disclosure;
Fig. 5 is a schematic diagram of a CAN-based SOA protocol network structure according to an embodiment of the present disclosure;
Fig. 6 is a structural block diagram of an embodiment of a remote control apparatus according to the present disclosure; and
Fig. 7 is a structural block diagram of an optional embodiment of the remote control apparatus according to the present disclosure.

### Detailed Description

In order to make the above objectives, features and advantages of the present disclosure more apparent and understandable, the present disclosure will be further described in detail below with reference to the accompanying drawings and specific embodiments.

One of the core concepts of the embodiments of the present disclosure is to install a proxy application in a vehicle and expose a function of the vehicle to the outside by the proxy application. A user can install an application in a terminal device to communicate with the proxy application to realize remote control of the function of the vehicle. Then, when multiple internal functions need to be exposed to the outside to allow remote control of these functions, it is only necessary to modify the proxy application. This improves the efficiency of remotely controlling internal functions of a vehicle and also increases the scalability of functions of a vehicle.

The proxy application and the application installed in the terminal device of the user are applications that perform communication using SOA protocol. The proxy application may be installed in a central gateway of the vehicle. A remote control method provided by the embodiments of the present disclosure may be executed by the central gateway of the vehicle.

Control of functions of the vehicle may include multiple types, such as control of a vehicle body function, control of a power function, control of an air conditioning function, control of a vehicle light function, control of a rearview mirror function, control of a seat function, etc. The embodiments of the present disclosure are not restricted in this respect, the scope of the invention being defined by the appended claims.

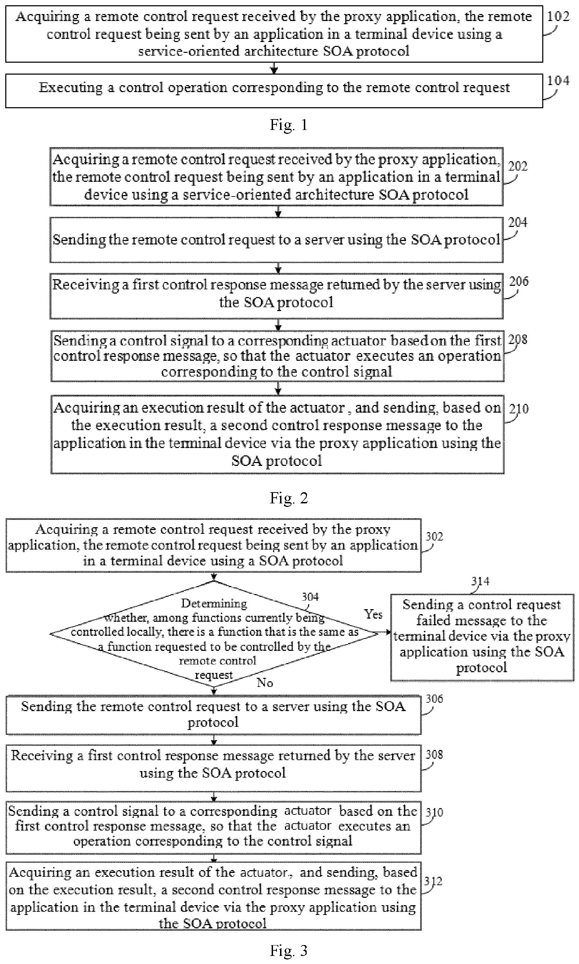

Referring to Fig. 1, shown is a flowchart of steps of an embodiment of a remote control method according to the present disclosure.

In step 102, a remote control request received by the proxy application is acquired, the remote control request sent by the application in the terminal device using the service-oriented architecture (SOA) protocol.

In step 104, a control operation corresponding to the remote control request is executed.

In the present embodiment, the user's terminal device is provided therein with the application for remotely controlling a function of the vehicle. The user may perform a control operation in the application to remotely control a function of the vehicle. After the user performs the control operation, the application in the user's terminal device may generate a corresponding remote control request. The control request is then sent using the SOA protocol to the proxy application installed in the central gateway of the vehicle.

After receiving the remote control request, the proxy application may send the remote control request to a processing unit of the central gateway. The processing unit of the central gateway processes the remote control request, and executes the control operation corresponding to the remote control request, to realize remote control of the function of the vehicle.

In summary, in the present embodiment, the vehicle can be provided therein with the proxy application, and a function of the vehicle can be exposed to the outside by the proxy application.

The user can send the remote control request to the proxy application via the application in the terminal device using the SOA protocol. After acquiring the remote control request received by the proxy application, the control operation corresponding to the remote control request may be executed. Then, when multiple internal functions need to be exposed to the outside to allow remote control of these functions, it is only necessary to modify the proxy application. This improves the efficiency of remotely controlling internal functions of a vehicle and also increases the scalability of functions of a vehicle.

The following describes how the processing unit of the central gateway executes the control operation corresponding to the remote control request.

Referring to Fig. 2, shown is a flowchart of steps of an optional embodiment of the remote control method according to the present disclosure.

In step 202, a remote control request received by the proxy application is acquired, the remote control request sent by the application in the terminal device using the service-oriented architecture (SOA) protocol.

After receiving the remote control request, the proxy application sends the remote control request to the processing unit of the central gateway, and the processing unit of the central gateway executes a control operation corresponding to the remote control request to realize remote control of a function of the vehicle. Reference is made to steps 204 to 208.

In step 204, the remote control request is sent to a server using the SOA protocol.

In step 206, a first control response message returned by the server using the SOA protocol is received.

In step 208, a control signal is sent to a corresponding actuator based on the first control response message, so that the actuator executes an operation corresponding to the control signal.

In the present embodiment, the actuator may be controlled by a controller to execute the corresponding control operation so as to control a function of the vehicle. A function of the controller is be implemented by a server-side application (which can be called a service) deployed in the server, and functions of different controllers are implemented by different services. After acquiring the remote control request, the processing unit of the central gateway sends the remote control request to the server using the SOA protocol. After receiving the remote control request, the server may parse the remote control request to determine a target service for processing the remote control request. The target service then processes the remote control request, generates a corresponding control response message, and returns the control response message to the central gateway of the vehicle using the SOA protocol. In order to facilitate subsequent differentiation, the control response message generated by the target service after processing the remote control request may be referred to as first control response message.

The processing unit of the central gateway may receive the first control response message returned by the server, and may parse the first control response message to extract the control signal, and then send the control signal to the corresponding actuator to instruct the actuator to execute the operation corresponding to the control signal. Remote control of the function of the vehicle is thus realized.

In step 210, an execution result of the actuator is acquired, and a second control response message is sent based on the execution result to the application in the terminal device via the proxy application using the SOA protocol.

After the actuator executes the operation corresponding to the control signal, the execution result may be returned to the processing unit of the central gateway. The execution result includes an execution successful result or an execution failed result. The execution successful result may refer to an execution result indicating successful execution of the operation corresponding to the control signal by the actuator, and the execution failed result may refer to an execution result indicating unsuccessful execution of the operation corresponding to the control signal by the actuator.

After that, the processing unit of the central gateway may generate the second control response message based on the execution result, and may return the second control response message to the proxy application installed in the central gateway. After receiving the second control response message, the proxy application may send the second control response message to the application in the terminal device using the SOA protocol. The application in the terminal device may then output, based on the second control response message, a result for the user's remote control of the function of the vehicle, so that the user can learn whether the remote control of the function of the vehicle is successful. The application in the terminal device may display on a display interface thereof the control result, or may broadcast the control result by voice. The present embodiment is not restricted in this respect.

In summary, in the present embodiment, the vehicle can be provided therein with the proxy application, and the function of the vehicle can be exposed to the outside by the proxy application. The user can send the remote control request to the proxy application via the application in the terminal device using the SOA protocol. After the remote control request received by the proxy application is received, the remote control request can be sent to the server using the SOA protocol. After the server returns the first control response message in response to the remote control request, the first control response message returned by the server using the SOA protocol can be received. Then, the control signal is sent to the corresponding actuator based on the first control response message, so that the actuator executes the operation corresponding to the control signal, to thus realize remote control of the function of the vehicle. Then, when multiple internal functions need to be exposed to the outside to allow remote control of these functions, it is only necessary to modify the proxy application. This improves the efficiency of remotely controlling internal functions of a vehicle and also increases the scalability of functions of a vehicle. Besides, it is also possible to acquire the execution result of the actuator, and send, based on the execution result, the second control response message to the application in the terminal device via the proxy application using the SOA protocol, so that the result about remote control of the function of the vehicle is fed back to the user via the application in the terminal device, so as to deliver an improved user experience.

In the present embodiment, in addition to remote control of a function of the vehicle, local control is also possible by performing a control operation in the vehicle. Thus, after the remote control request is acquired, it may be first determined whether the function requested to be controlled by the remote control request conflicts with a function being currently controlled locally. When it is determined that there is no conflict between the two, control may be performed to the function requested to be controlled by the remote control request.

Referring to Fig. 3, shown is a flowchart of steps of another optional embodiment of the remote control method according to the present disclosure.

In step 302, a remote control request received by the proxy application is acquired, the remote control request sent by the application in the terminal device using the service-oriented architecture (SOA) protocol.

The application in the terminal device may, based on Ethernet, send the remote control request to the proxy application deployed in the central gateway using the SOA protocol. The remote control request may include multiple types, such as a request for opening a window of the vehicle, a request for turning off an air conditioner, a request for closing a door, a request for adjusting a rearview mirror, etc. The present embodiment is not restricted in this respect.

Accordingly, the proxy application in the central gateway may receive, based on Ethernet, the remote control request, and then send the remote control request to a processing unit of the central gateway.

In step 304, it is determined whether, among functions currently being controlled locally, there is a function identical to a function requested to be controlled by the remote control request.

In the present embodiment, after receiving the remote control request, the processing unit of the central gateway may parse the remote control request in accordance with Ethernet-based SOA protocol analysis to determine a function requested to be controlled by the remote control request.

In the present embodiment, the level of priority of local control of a function of the vehicle may be preset to be higher than the level of priority of remote control of the function of the vehicle. Thus, after the function requested to be controlled by the remote control request is determined, functions currently being controlled locally may be obtained. Then, it is determined whether, among the functions currently being controlled locally, there is a function identical to the function requested to be controlled by the remote control request. If among the functions currently being controlled locally there is no function identical to the function requested to be controlled by the remote control request, it means that the function requested to be controlled by the remote control request does not conflict with the function currently being controlled locally, at which point step 306 may be executed. If among the functions currently being controlled locally there is a function identical to the function requested to be controlled by the remote control request, it means that the function requested to be controlled by the remote control request conflicts with the function currently being controlled locally, at which point step 314 may be executed.

For example, in the case that the function being controlled locally is a seat forward and backward movement function, if the function requested to be controlled by the remote control request is the seat forward and backward movement function, then the function requested to be controlled by the remote control request conflicts with the function being controlled locally, at which point step 314 may be executed; and if the function requested to be controlled by the remote control request is a window opening and closing function, it does not conflict with the function being controlled locally, at which point step 306 may be executed.

In step 306, the remote control request is sent to the server using the SOA protocol.

In step 308, a first control response message returned by the server using the SOA protocol is received.

In step 310, a control signal is sent to a corresponding actuator based on the first control response message, so that the actuator executes an operation corresponding to the control signal.

In step 312, an execution result of the actuator is acquired, and a second control response message is sent, based on the execution result, to the application in the terminal device via the proxy application using the SOA protocol.

Among these steps, steps 306 to 312 will be described in the following embodiments.

In step 314, a control request failure message is sent to the terminal device via the proxy application using the SOA protocol.

When among the functions currently being controlled locally, there is a function identical to the function requested to be controlled by the remote control request, it is not possible to perform remote control of the function of the vehicle. At this time, the processing unit of the central gateway may generate a control request failure message, and send the control request failure message to the proxy application. Then, the proxy application may send, based on Ethernet, the control request failure message to the terminal device using the SOA protocol to inform the user that the remote control fails.

To sum up, in the present embodiment, after the remote control request received by the proxy application is acquired, it can be determined first whether among the functions currently being controlled locally, there is a function identical to the function requested to be controlled by the remote control request. If there is a function identical to the function requested to be controlled by the remote control request, a control request failure message is sent to the terminal device via the proxy application using the SOA protocol, to ensure the priority of local control of the function of the vehicle in the vehicle and prevent the remote control from conflicting with the local control.

The following describes how to control the function requested to be controlled by the remote control request based on the remote control request.

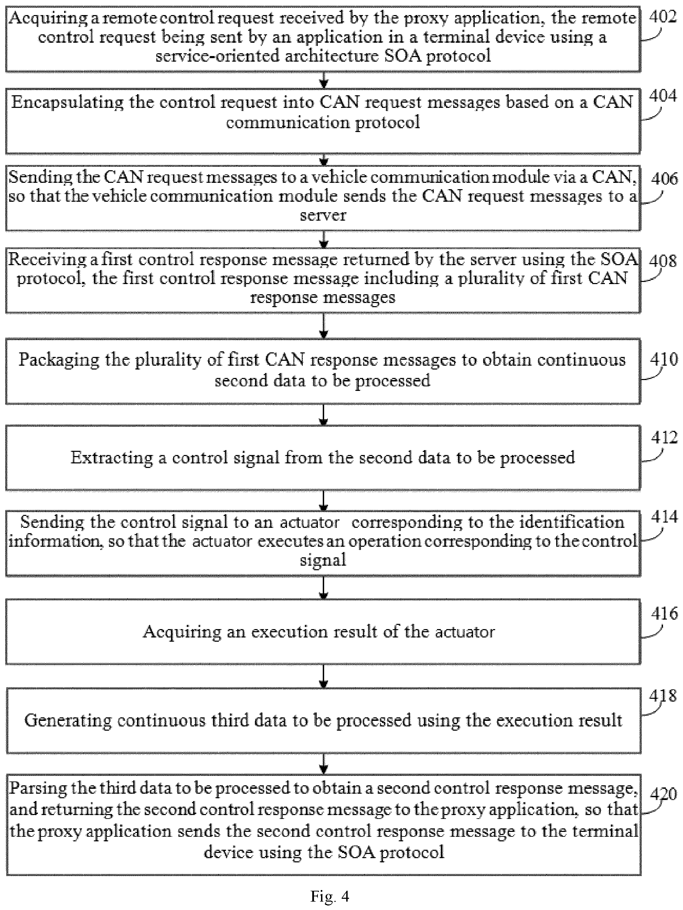

Referring to Fig. 4, shown is a flowchart of steps of another optional embodiment of the remote control method according to the present disclosure.

In step 402, a remote control request received by the proxy application is acquired, the remote control request sent by the application in the terminal device using the service-oriented architecture (SOA) protocol.

Step 402 is similar to the above-described step 302, and will not be repeated herein.

In the present embodiment, ways in which the processing unit of the central gateway sends the remote control request to the server using the SOA protocol may include: sending the remote control request to the server based on a controller area network (CAN) and using the SOA protocol; or sending the remote control request to the server based on Ethernet and using the SOA protocol. In other words, it is possible to communicate with the server based on Ethernet, and it is also possible to communicate with the server based on a CAN. The present embodiment is not restricted in this respect.

The following describes an example of sending the remote control request to the server based on a CAN and using the SOA protocol. Reference may be made to steps 404 to 406 for the sending the remote control request to the server based on a CAN and using the SOA protocol.

In step 404, the control request is encapsulated into one or more CAN request messages based on a CAN communication protocol.

In step 406, the one or more CAN request messages are sent to a vehicle communication module via a CAN, and sent to the server by the vehicle communication module.

In the present embodiment, since the remote control request needs to be sent via a CAN interface, the remote control request may be encapsulated into CAN messages first, and then the CAN messages are sent to the vehicle communication module via a CAN and sent to the server by the vehicle communication module.

The vehicle communication module may refer to a module used for the vehicle to communicate with other devices, and may be, for example, a vehicle T-BOX (a telematics box) and so on. The present embodiment is not restricted in this respect.

Step 404 may include the following sub-steps S4042 to S4044.

In sub-step S4042, the remote control request is encapsulated into continuous first data to be processed based on the CAN communication protocol.

In sub-step S4044, the first data to be processed is sub-packaged to obtain a plurality of CAN request messages.

In the present embodiment, the remote control request may be encapsulated into continuous data in a data format of data transmitted in accordance with the CAN-based SOA protocol, to obtain the first data to be processed. Since the amount of data transmitted via the CAN each time is limited, in order to make it possible to send the remote control request to the server via the CAN, the continuous first data to be processed may be sub-packaged based on the CAN communication protocol so that the continuous first data to be processed is divided into a plurality of CAN messages. In order to facilitate subsequent differentiation, the CAN messages obtained by sub-packaging the first data to be processed may be referred to as CAN request messages.

In an example, the data format of data transmitted in accordance with the CAN-based SOA protocol may be as shown in Table 1.

**Table 1**

| Field | Server ID | Data Length | Terminal ID | Protocol Version | Message Type | Return Code | Data |
|---|---|---|---|---|---|---|---|
| | **** | **** | **** | **** | **** | **** | **** |

Of course, the data format of data transmitted in accordance with the CAN-based SOA protocol may also include other forms. For example, other fields may be included, or the fields may be in a different order. Besides, the number of bytes corresponding to each field may be set as required. The present embodiment is not restricted in this respect.

The first data to be processed may include a plurality of bytes, such as one hundred and twenty-eight bytes. If the number of bytes transmitted via the CAN each time is eight bytes, then the first data to be processed may be divided into 16 CAN request messages.

Step 406 may include sending the CAN request messages to the vehicle communication module in the vehicle by invoking a CAN interface, so that the vehicle communication module sends the CAN request messages to the server. Specifically, a CAN interface used to send the CAN request messages may be determined; then the CAN interface is invoked, and the CAN request messages are sent to the vehicle communication module via physical hardware corresponding to the CAN interface, so that the vehicle communication module sends the CAN request messages to the server. The vehicle communication module may be a mobile network communication module, or a WIFI communication module, or may be of course other communication modules. The present embodiment is not restricted in this respect.

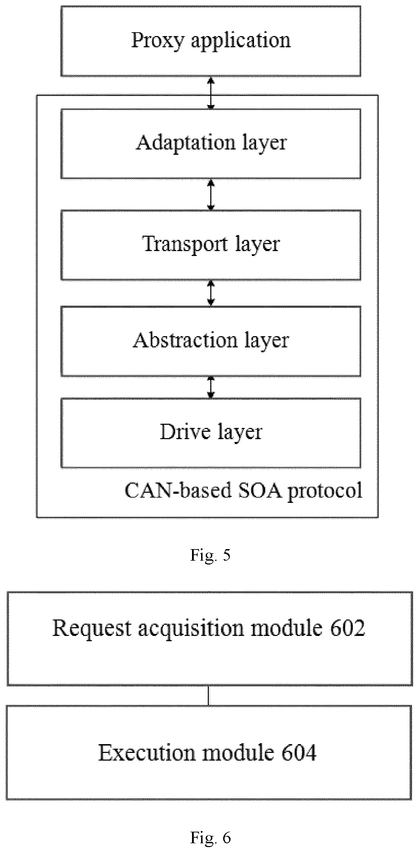

In an optional embodiment of the present disclosure, a target application may be deployed in the processing unit of the central gateway, and the target application may be used to realize sending of the remote control request to the server based on the CAN in the vehicle using the SOA protocol. The target application may construct a CAN-based SOA protocol network structure. Referring to Fig. 5, shown is a schematic diagram of a CAN-based SOA protocol network structure according to an embodiment of the present disclosure. The CAN-based SOA protocol includes a plurality of logic layers, namely an adaptation layer, a transport layer, an abstraction layer, and a drive layer. These logic layers may be used to realize sending of the remote control request to the server based on the CAN in the vehicle using the SOA protocol. Details may be as follows.

After receiving the remote control request, the proxy application may send the remote control request to the adaptation layer. The adaptation layer acquires the remote control request received by the proxy application (i.e., the above step 402 is executed). Then, the remote control request is encapsulated into continuous first data to be processed based on the CAN communication protocol (i.e., sub-step S4042 is executed). The first data to be processed is then sent to the transport layer, and is sub-packaged by the transport layer to obtain a plurality of CAN request messages (i.e., sub-step S4044 is executed). The transport layer sends the plurality of CAN request messages to the abstraction layer, and the abstraction layer invokes a CAN interface. The drive layer may then drive physical hardware corresponding to the CAN interface, so as to realize sending of the CAN messages to the vehicle communication module in the vehicle using the SOA protocol.

In step 408, a first control response message returned by the server using the SOA protocol is received, the first control response message including a plurality of first CAN response messages.

In the present embodiment, after receiving the plurality of CAN request messages corresponding to the remote control request sent by the processing unit of the central gateway, the server may package the plurality of CAN request messages to obtain continuous data. A dividing mode of dividing the continuous data into the plurality of CAN request messages by the processing unit of the central gateway and a sending mode of sending the plurality of CAN request messages may be determined. The plurality of CAN messages are then packaged in accordance with the dividing mode and the sending mode.

The server may then parse the continuous data in accordance with the CAN-based SOA protocol, and determine an object requested to be controlled by the remote control request, a function requested to be controlled for the object, and a control method for the function. The object requested to be controlled by the remote control request may include multiple types, such as a window, a door, a seat, an accelerator, a brake, etc. The present embodiment is not restricted in this respect. The function requested to be controlled for the object may include multiple types. For example, when the object is a seat, functions requested to be controlled for the seat may include a forward and backward movement function, a vertical movement function, a backrest angle adjustment function, etc.; when the object is a window of the vehicle, functions requested to be controlled for the window may include an opening and closing function; and so on. The control method for the function may include multiple types. For example, when the function is a forward and backward movement function of a seat, corresponding control methods may include forward movement, backward movement; when the function is an opening and closing function of a window, corresponding control methods may include opening the window, closing the window; and so on.

After that, an actuator for realizing the function requested to be controlled as well as identification information corresponding to the actuator are determined based on the object requested to be controlled by the remote control request and the function request to be controlled for the object. Then, a control signal for instructing the actuator to execute a corresponding operation is generated in accordance with the CAN-based SOA protocol and based on the identification information and the control method, and a first control response message is generated based on the control signal. The first control response message is also continuous data. Further, the server may divide the first control response message to obtain a plurality of corresponding first CAN response messages, and send the first CAN response messages corresponding to the first control response message to the processing unit of the central gateway.

Then, the processing unit of the central gateway may receive the first control response message returned by the server using the SOA protocol, and send a control signal to the corresponding actuator based on the first control response message, so that the actuator executes an operation corresponding to the control signal. Reference may then be made to steps 410 to 414.

In step 410, the plurality of first CAN response messages are packaged to obtain continuous second data to be processed.

In step 412, a control signal is extracted from the second data to be processed.

In step 414, the control signal is sent to the actuator corresponding to the identification information, and an operation corresponding to the control signal is executed by the actuator.

In the present embodiment, the processing unit of the central gateway may acquire a dividing mode of dividing by the server the continuous data into the plurality of first CAN response messages and a sending mode of sending the plurality of first CAN response messages, and then package the plurality of first CAN response messages based on the dividing mode and the sending mode to obtain corresponding continuous data (later referred to as second data to be processed). The second data to be processed contains a control signal for instructing the actuator to perform an operation, and therefore the control signal may be extracted from the second data to be processed. The control signal is then sent to the actuator corresponding to the identification information. After receiving the control signal, the actuator may execute the operation corresponding to the control signal to realize control of the function of the vehicle. For example, when an actuator for a left window of the vehicle receives a window opening signal, the left window may be opened; when an actuator for an air conditioner receives a turning-off signal, the air conditioner may be turned off; and so on.

The CAN-based SOA protocol described in the above examples may include an adaptation layer, a transport layer, an abstraction layer, and a drive layer. Among these multiple logic layers, the drive layer may drive the corresponding physical hardware to receive the first control response message sent by the server (i.e., step 308 is executed); then the abstraction layer acquires via the CAN interface the first control response message received by the physical hardware from the server, and sends the first control response message to the transport layer. The transport layer may execute the above-mentioned steps 310 to 314 to realize sending of the control signal to the corresponding actuator.

In step 416, an execution result of the actuator is acquired.

In the present embodiment, after the actuator executes the operation corresponding to the control signal, an execution result may be returned to the processing unit of the central gateway, and the processing unit of the central gateway may receive the execution result of the actuator.

Then, the processing unit of the central gateway, based on the execution result, sends a second control response message to the application in the terminal device via the proxy application using the SOA protocol. Reference may then be made to steps 418 to 420.

In step 418, continuous third data to be processed is generated using the execution result.

In step 420, the third data to be processed is parsed to obtain a second control response message, and the second control response message is returned to the proxy application, so that the proxy application sends the second control response message to the terminal device using the SOA protocol.

In the present embodiment, the processing unit of the central gateway may generate continuous data (later referred to as third data to be processed) in a data format of CAN-based SOA protocol using the second data to be processed corresponding to the first control response message returned by the server as well as the execution result of the actuator. Since the proxy application and the application in the terminal device communicate with each other via Ethernet, the processing unit of the central gateway may parse the third data to be processed based on the Ethernet-based SOA protocol to obtain the second control response message, and then send the second control response message to the proxy application. After receiving the second control response message, the proxy application may send the second control response message to the terminal device using the Ethernet-based SOA protocol.

Among these steps, steps 418 to 420 may be implemented by the adaptation layer in the CAN-based SOA protocol.

To sum up, in the present embodiment, in the process of sending the remote control request to the server, the remote control request may be encapsulated into the CAN request messages based on the CAN communication protocol; the CAN request messages are sent via the CAN to the vehicle communication module, and then sent to the server by the vehicle communication module, by way of which the remote control request can be rapidly sent to the server.

In addition, in the present embodiment, after receiving the first control response message returned by the server, the plurality of first CAN response messages in the first control response message may be packaged to obtain the continuous second data to be processed; the control signal is extracted from the second data to be processed, and sent to the actuator corresponding to the identification information; and then the actuator executes the operation corresponding to the control signal. In this manner, the signal extracted from the first response message, without being converted, is directly sent to the corresponding actuator via the CAN. The efficiency of control of the function of the vehicle is thus improved.

It should be noted that, for the sake of simplicity of the description, the method embodiments are all described as a series of action combinations, but those skilled in the art should appreciate that the embodiments of the present disclosure are not limited by the described orders of the actions, insofar encompassed within the scope of the invention as defined by the appended claims.

An embodiment of the present disclosure provides a remote control apparatus. The remote control apparatus is applied to a vehicle which is provided with a proxy application. The apparatus includes the following modules.

Referring to Fig. 6, shown is a structural block diagram of an embodiment of a remote control apparatus according to the present disclosure. The remote control apparatus may specifically include a request acquisition module 602 and an execution module 604.

The request acquisition module 602 is configured to acquire a remote control request received by the proxy application, the remote control request sent by an application in a terminal device using a service-oriented architecture (SOA) protocol.

The execution module 604 is configured to execute a control operation corresponding to the remote control request.

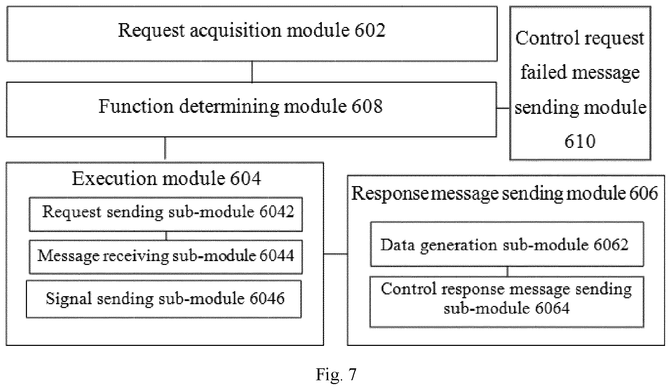

Referring to Fig. 7, shown is a structural block diagram of an optional embodiment of the remote control apparatus according to the present disclosure. The remote control apparatus may specifically include the following modules.

In an optional embodiment of the present disclosure, the execution module 604 includes a request sending sub-module 6042, a message receiving sub-module 6044, and a signal sending sub-module 6046.

The request sending sub-module 6042 is configured to send the remote control request to a server using the SOA protocol.

The message receiving sub-module 6044 is configured to receive a first control response message returned by the server using the SOA protocol.

The signal sending sub-module 6046 is configured to send a control signal to a corresponding actuator based on the first control response message, so that the actuator executes an operation corresponding to the control signal.

In an optional embodiment of the present disclosure, the apparatus further includes a response message sending module 606.

The response message sending module 606 is configured to acquire an execution result of the actuator, and send, based on the execution result, a second control response message to the application in the terminal device via the proxy application using the SOA protocol.

In an optional embodiment of the present disclosure, the request sending sub-module 6042 is configured to send the remote control request to the server based on a CAN and using the SOA protocol, or send the remote control request to the server based on Ethernet and using the SOA protocol.

In an optional embodiment of the present disclosure, the request sending sub-module 6042 is configured to encapsulate the control request into one or more CAN request messages based on the CAN communication protocol, and send the one or more CAN request messages to a vehicle communication module via a CAN, so that the one or more CAN request messages are sent to the server by the vehicle communication module.

In an optional embodiment of the present disclosure, the request sending sub-module 6042 is configured to encapsulate the control request into continuous first data to be processed based on the CAN communication protocol, and sub-package the first data to be processed to obtain the plurality of CAN request messages.

In an optional embodiment of the present disclosure, the request sending sub-module 6042 is used to send the CAN request messages to the vehicle communication module in the vehicle by invoking a CAN interface, so that the CAN request messages are sent to the server by the vehicle communication module.

In an optional embodiment of the present disclosure, the first control response message includes a plurality of first CAN response messages; and the signal sending sub-module 6046 is configured to package the plurality of first CAN response messages to obtain continuous second data to be processed, extract a control signal from the second data to be processed, and send the control signal to an actuator corresponding to identification information, so that the actuator executes an operation corresponding to the control signal.

In an optional embodiment of the present disclosure, the response message sending module 606 may include a data generation sub-module 6062 and a control response message sending sub-module 6064.

The data generation sub-module 6062 is configured to generate continuous third data to be processed based on the execution result.

The control response message sending sub-module 6064 is configured to parse the third data to be processed to obtain a second control response message, and return the second control response message to the proxy application, so that the proxy application sends the second control response message to the terminal device using the SOA protocol.

In an optional embodiment of the present disclosure, the apparatus may further include a function determining module 608 and a request acquisition module 602.

The function determining module 608 is configured to determine whether among functions currently being controlled locally, there is a function identical to a function requested to be controlled by the remote control request.

The request acquisition module 602 is configured to perform the step of sending the remote control request to the server using the SOA protocol if there is no function identical to the function requested to be controlled by the remote control request.

In an optional embodiment of the present disclosure, the apparatus may further include a control request failure message sending module 610.

The control request failure message sending module 610 is configured to send a control request failure message to the terminal device via the proxy application using the SOA protocol if there is a function identical to the function requested to be controlled by the remote control request.

In summary, in the present embodiment, the vehicle can be provided therein with the proxy application, and a function of the vehicle can be exposed to the outside by the proxy application. The user can send the remote control request to the proxy application via the application in the terminal device using the SOA protocol. After acquiring the remote control request received by the proxy application, the control operation corresponding to the remote control request may be executed. Then, when multiple internal functions need to be exposed to the outside to allow remote control of these functions, it is only necessary to modify the proxy application. This improves the efficiency of remotely controlling internal functions of a vehicle and also increases the scalability of functions of a vehicle.

The apparatus embodiments are similar to the method embodiments and therefore descriptions thereof are relatively simple. Reference may be made to the description of the method embodiments for related details.

An embodiment of the present disclosure provides a vehicle. The vehicle includes a memory and one or more programs. The one or more programs are stored in the memory and are configured to be executed by one or more processors to implement the remote control method according to any one of the embodiments of the present disclosure.

An embodiment of the present disclosure provides a readable storage medium. When instructions in the storage medium are executed by a processor of a vehicle, the vehicle may be caused to execute the remote control method according to any one of the embodiments of the present disclosure.

The various embodiments in this specification are described in a progressive manner. Description of each embodiment focuses on differences of the embodiment from other embodiments, and for parts of an embodiment that are the same as or similar to those of another embodiment, reference can be made to the latter.

Those skilled in the art should appreciate that the embodiments of the present disclosure may be provided as methods, apparatuses, or computer program products. Therefore, the embodiments of the present disclosure may be complete hardware embodiments, complete software embodiments, or software combined with hardware embodiments. Moreover, the embodiments of the present disclosure each may adopt the form of a computer program product implemented on one or more computer-usable storage media (including but not limited to disk storage, CD-ROM, optical storage, etc.) having computer-usable program codes stored thereon.

The embodiments of the present disclosure are described with reference to the flowcharts and/or block diagrams of the methods, terminal devices (systems), and computer program products according to the embodiments of the present disclosure. It should be appreciated that each step and/or block in the flowcharts and/or block diagrams, and combinations of steps and/or blocks in the flowcharts and/or block diagrams may be implemented by computer program instructions. These computer program instructions may be provided to a processor of a general-purpose computer, of a special-purpose computer, of an embedded processor, or of other programmable data processing terminal device to produce a machine, so that instructions executed by the processor of the computer or other programmable data processing terminal device produces an apparatus for realizing a function specified in a step or steps in the flowcharts and/or a block or blocks in the block diagrams.

These computer program instructions may also be stored in a computer-readable memory capable of causing a computer or other programmable data processing terminal devices to work in a specific manner, so that instructions stored in the computer-readable memory produce an article including an instruction apparatus. The instruction apparatus implements a function specified in a step or steps in the flowcharts and/or a block or blocks in the block diagrams. These computer program instructions may also be loaded on a computer or other programmable data processing terminal devices, so that a series of operation steps are executed on the computer or other programmable terminal devices to produce computer-implemented processing, so that instructions executed on the computer or other programmable terminal devices provide steps for implementing a function specified in a step or steps in the flowcharts and/or a block or blocks in the block diagrams.

Although the preferred embodiments of the embodiments of the present disclosure have been described, those skilled in the art can make additional changes and modifications to these embodiments insofar encompassed within thee scope of the invention as defined by the appended claims.

It should be noted finally that in this text relational terms such as "first" and "second" are only used to distinguish one entity or operation from another entity or operation, and are not used to require or imply that these entities or operations are provided in any such actual relationship or order. Moreover, the terms "include", "comprise" or any other variants thereof are intended to cover non-exclusive inclusion, so that a process, a method, an article, or a terminal device that includes a list of elements includes not only those elements, but also those that are not explicitly listed, or also includes elements inherent to the process, the method, the article, or the terminal device. Without more restrictions, an element introduced by the phrase "includes a..." does not exclude the existence of other identical elements in a process, a method, an article, or a terminal device that includes the element.

The above is a detailed description of the remote control method, the remote control apparatus, and the vehicle provided by the present disclosure. Specific examples are used in this text to illustrate the principles and implementation of the present disclosure. The description of the above embodiments is only intended to facilitate understanding of the method of the present disclosure and the core idea thereof, the scope of the invention being defined by the appended claims.

## Claims

1. A remote control method for a vehicle, the vehicle provided with a proxy application therein, the method comprising:
acquiring (102, 202, 302, 402) a remote control request received by the proxy application, the remote control request sent by an application in a user's terminal device using a service-oriented architecture SOA protocol; and
executing (104, 208, 310, 414) a control operation corresponding to the remote control request,
wherein said executing a control operation corresponding to the remote control request comprises:
sending (204, 306) the remote control request to a server using the SOA protocol;
receiving (206, 308) a first control response message returned by the server using the SOA protocol; and
sending (208, 310) a control signal to a corresponding actuator based on the first control response message, thereby causing the actuator to execute an operation corresponding to the control signal.

2. The remote control method according to claim 1, further comprising:
acquiring (210, 312) an execution result of the actuator, and sending, based on the execution result and via the proxy application, a second control response message to the application in the user's terminal device using the SOA protocol.

3. The remote control method according to claim 1, wherein said sending the remote control request to a server using the SOA protocol comprises:
sending the remote control request to the server using the SOA protocol based on a controller area network CAN; or
sending the remote control request to the server using the SOA protocol based on Ethernet.

4. The remote control method according to claim 3, wherein said sending the remote control request to the server using the SOA protocol based on a CAN comprises:
encapsulating (404) the control request into one or more CAN request messages based on a CAN communication protocol; and
sending (406) the one or more CAN request messages to a vehicle communication module via a CAN, thereby allowing the one or more CAN request messages to be sent to the server by the vehicle communication module.

5. The remote control method according to claim 4, wherein said encapsulating the control request into one or more CAN request messages based on a CAN communication protocol comprises:
encapsulating the control request into continuous first data to be processed based on the CAN communication protocol; and
sub-packaging the first data to be processed to obtain a plurality of CAN request messages.

6. The remote control method according to claim 5, wherein said sending the CAN request messages to a vehicle communication module via a CAN, thereby allowing the CAN request messages to be sent to the server by the vehicle communication module, comprises:
sending the CAN request messages to the vehicle communication module in the vehicle by invoking a CAN interface, thereby causing the vehicle communication module to send the CAN request messages to the server.

7. The remote control method according to claim 1, wherein the first control response message comprises a plurality of first CAN response messages, and said sending a control signal to a corresponding actuator based on the first control response message, thereby causing the actuator to execute an operation corresponding to the control signal, comprises:
packaging (410) the plurality of first CAN response messages to obtain continuous second data to be processed;
extracting (412) the control signal from the second data to be processed; and
sending (414) the control signal to the actuator corresponding to identification information contained in the control signal, thereby causing the actuator to execute the operation corresponding to the control signal.

8. The remote control method according to claim 7, wherein the identification information is determined based on a target object and a target function of the remote control request.

9. The remote control method according to claim 2, wherein said sending, based on the execution result, a second control response message to the user's terminal device via the proxy application using the SOA protocol, comprises:
generating (418) continuous third data to be processed using the execution result; and
parsing (420) the third data to be processed to obtain the second control response message, and returning the second control response message to the proxy application, to allow the second control response message to be sent to the user's terminal device by the proxy application using the SOA protocol.

10. The remote control method according to claim 1, further comprising:
determining (304) whether, among functions currently being controlled locally, there is a function identical to a function requested to be controlled by the remote control request; and
if no, executing the step of sending (306) the remote control request to the server using the SOA protocol.

11. The remote control method according to claim 10, further comprising:
sending (314) a control request failure message to the user's terminal device via the proxy application using the SOA protocol, if, among the functions currently being controlled locally, there is a function identical to the function requested to be controlled by the remote control request.

12. A remote control apparatus for a vehicle, the vehicle provided with a proxy application therein, the remote control apparatus comprising:
a request acquisition module (602), configured to acquire a remote control request received by the proxy application, the remote control request sent by an application in a user's terminal device using a service-oriented architecture SOA protocol; and
an execution module (604), configured to execute a control operation corresponding to the remote control request, wherein the execution module comprises:
a request sending sub-module (6042), configured to send the remote control request to a server using the SOA protocol;
a message receiving sub-module (6044), configured to receive a first control response message returned by the server using the SOA protocol; and
a signal sending sub-module (6046), configured to send a control signal to a corresponding actuator based on the first control response message, to cause the actuator to execute an operation corresponding to the control signal.

13. A vehicle, comprising memory and one or more programs stored thereon which, when executed by one or more processors, implement the remote control method according to any one of claims 1 to 11.

14. A readable storage medium comprising instructions stored thereon which, when executed by a processor of a vehicle, cause the vehicle to implement the remote control method according to any one of claims 1 to 11.

## Patentansprüche

1. Fernsteuerungsverfahren für ein Fahrzeug, wobei das Fahrzeug mit einer Proxy-Anwendung darin versehen ist, wobei das Verfahren Folgendes beinhaltet:
Erfassen (102, 202, 302, 402) einer von der Proxy-Anwendung empfangenen Fernsteuerungsanforderung, wobei die Fernsteuerungsanforderung von einer Anwendung in einem Endgerät eines Benutzers mit einem SOA-(Service-Oriented Architecture)-Protokoll gesendet wird; und
Ausführen (104, 208, 310, 414) einer Steueroperation entsprechend der Fernsteuerungsanforderung,
wobei das genannte Ausführen einer Steueroperation entsprechend der Fernsteuerungsanforderung Folgendes beinhaltet:
Senden (204, 306) der Fernsteuerungsanforderung zu einem Server mit dem SOA-Protokoll;
Empfangen (206, 308) einer vom Server mit dem SOA-Protokoll zurückgegebenen ersten Steuerungsantwortnachricht; und
Senden (208, 310) eines Steuersignals zu einem entsprechenden Aktuator auf der Basis der ersten Steuerungsantwortnachricht, wodurch der Aktuator veranlasst wird, eine dem Steuersignal entsprechende Operation auszuführen.

2. Fernsteuerungsverfahren nach Anspruch 1, das ferner Folgendes beinhaltet:
Erfassen (210, 312) eines Ausführungsergebnisses des Aktuators, und Senden, auf der Basis des Ausführungsergebnisses und über die Proxy-Anwendung, einer zweiten Steuerungsantwortnachricht zu der Anwendung im Endgerät des Benutzers mit dem SOA-Protokoll.

3. Fernsteuerungsverfahren nach Anspruch 1, wobei das genannte Senden der Fernsteuerungsanforderung zu einem Server mit dem SOA-Protokoll Folgendes beinhaltet:
Senden der Fernsteuerungsanforderung zum Server mit dem SOA-Protokoll auf der Basis eines Controller Area Networks CAN; oder
Senden der Fernsteuerungsanforderung zum Server mit dem SOA-Protokoll auf der Basis von Ethernet.

4. Fernsteuerungsverfahren nach Anspruch 3, wobei das genannte Senden der Fernsteuerungsanforderung zum Server mit dem SOA-Protokoll auf der Basis eines CAN Folgendes beinhaltet:
Einkapseln (404) der Steuerungsanforderung in eine oder mehrere CAN-Anforderungsnachrichten auf der Basis eines CAN-Kommunikationsprotokolls; und
Senden (406) der ein oder mehreren CAN-Anforderungsnachrichten zu einem Fahrzeugkommunikationsmodul über ein CAN, wodurch die ein oder mehreren CAN-Anforderungsnachrichten durch das Fahrzeugkommunikationsmodul zum Server gesendet werden können.

5. Fernsteuerungsverfahren nach Anspruch 4, wobei das genannte Einkapseln der Steuerungsanforderung in eine oder mehrere CAN-Anforderungsnachrichten auf der Basis eines CAN-Kommunikationsprotokolls Folgendes beinhaltet:
Einkapseln der Steuerungsanforderung in kontinuierliche erste Daten, die auf der Basis des CAN-Kommunikationsprotokolls zu verarbeiten sind; und
Unterverpacken der ersten zu verarbeitenden Daten, um mehrere CAN-Anforderungsnachrichten zu erhalten.

6. Fernsteuerungsverfahren nach Anspruch 5, wobei das genannte Senden der CAN-Anforderungsnachrichten zu einem Fahrzeugkommunikationsmodul über ein CAN, wodurch ermöglicht wird, dass die CAN-Anforderungsnachrichten durch das Fahrzeugkommunikationsmodul zum Server gesendet werden, Folgendes beinhaltet:
Senden der CAN-Anforderungsnachrichten zum Fahrzeugkommunikationsmodul im Fahrzeug durch Aufrufen einer CAN-Schnittstelle, wodurch das Fahrzeugkommunikationsmodul veranlasst wird, die CAN-Anforderungsnachrichten zum Server zu senden.

7. Fernsteuerungsverfahren nach Anspruch 1, wobei die erste Steuerungsantwortnachricht mehrere erste CAN-Antwortnachrichten umfasst und das genannte Senden eines Steuersignals zu einem entsprechenden Aktuator auf der Basis der ersten Steuerungsantwortnachricht, wodurch der Aktuator veranlasst wird, eine dem Steuersignal entsprechende Operation auszuführen, Folgendes beinhaltet:
Verpacken (410) der mehreren ersten CAN-Antwortnachrichten, um kontinuierliche zweite zu verarbeitende Daten zu erhalten;
Extrahieren (412) des Steuersignals aus den zweiten zu verarbeitenden Daten; und
Senden (414) des Steuersignals zum Aktuator entsprechend den im Steuersignal enthaltenen Identifikationsinformationen, wodurch der Aktuator veranlasst wird, die dem Steuersignal entsprechende Operation auszuführen.

8. Fernsteuerungsverfahren nach Anspruch 7, wobei die Identifikationsinformationen auf der Basis eines Zielobjekts und einer Zielfunktion der Fernsteuerungsanforderung bestimmt werden.

9. Fernsteuerungsverfahren nach Anspruch 2, wobei das genannte Senden, auf der Basis des Ausführungsergebnisses, einer zweiten Steuerungsantwortnachricht zum Endgerät des Benutzers über die Proxy-Anwendung mit dem SOA-Protokoll Folgendes beinhaltet:
Erzeugen (418) kontinuierlicher dritter zu verarbeitender Daten anhand des Ausführungsergebnisses; und
Parsen (420) der dritten zu verarbeitenden Daten zum Erhalten der zweiten Steuerungsantwortnachricht, und Zurückgeben der zweiten Steuerungsantwortnachricht an die Proxy-Anwendung, um es zu ermöglichen, dass die zweite Steuerungsantwortnachricht durch die Proxy-Anwendung mit dem SOA-Protokoll zum Endgerät des Benutzers gesendet wird.

10. Fernsteuerungsverfahren nach Anspruch 1, das ferner Folgendes beinhaltet:
Feststellen (304), ob es unter derzeit lokal gesteuerten Funktionen eine Funktion gibt, die mit einer Funktion identisch ist, deren Steuerung durch die Fernsteuerungsanforderung angefordert wird; und
wenn nein, Ausführen des Schritts des Sendens (306) der Fernsteuerungsanforderung zum Server mit dem SOA-Protokoll.

11. Fernsteuerungsverfahren nach Anspruch 10, das ferner Folgendes beinhaltet:
Senden (314) einer Steuerungsanforderungsfehlermeldung zum Endgerät des Benutzers über die Proxy-Anwendung mit dem SOA-Protokoll, wenn es unter den derzeit lokal gesteuerten Funktionen eine Funktion gibt, die mit der Funktion identisch ist, deren Steuerung durch die Fernsteuerungsanforderung angefordert wird.

12. Fernsteuerungsvorrichtung für ein Fahrzeug, wobei das Fahrzeug mit einer Proxy-Anwendung darin versehen ist, wobei die Fernsteuerungsvorrichtung Folgendes umfasst:
ein Anforderungserfassungsmodul (602), konfiguriert zum Erfassen einer von der Proxy-Anwendung empfangenen Fernsteuerungsanforderung, wobei die Fernsteuerungsanforderung von einer Anwendung in einem Endgerät des Benutzers mit einem SOA-(Service-Oriented Architecture)-Protokoll gesendet wird; und
ein Ausführungsmodul (604), konfiguriert zum Ausführen einer der Fernsteuerungsanforderung entsprechenden Steuerungsoperation, wobei das Ausführungsmodul Folgendes umfasst:
ein Anforderungssende-Submodul (6042), konfiguriert zum Senden der Fernsteuerungsanforderung mit dem SOA-Protokoll zu einem Server;
ein Nachrichtenempfangs-Submodul (6044), konfiguriert zum Empfangen einer vom Server mit dem SOA-Protokoll zurückgegebenen ersten Steuerungsantwortnachricht; und
ein Signalsende-Submodul (6046), konfiguriert zum Senden eines Steuersignals zu einem entsprechenden Aktuator auf der Basis der ersten Steuerungsantwortnachricht, um den Aktuator zum Ausführen eines dem Steuersignal entsprechenden Vorgangs zu veranlassen.

13. Fahrzeug, das einen Speicher und ein oder mehrere darauf gespeicherte Programme umfasst, die bei Ausführung durch einen oder mehrere Prozessoren das Fernsteuerungsverfahren nach einem der Ansprüche 1 bis 11 implementieren.

14. Lesbares Speichermedium mit darauf gespeicherten Befehlen, die bei Ausführung durch einen Prozessor eines Fahrzeugs das Fahrzeug zum Durchführen des Fernsteuerungsverfahrens nach einem der Ansprüche 1 bis 11 zu veranlassen.

## Revendications

1. Procédé de commande à distance destiné à un véhicule, le véhicule étant doté d'une application mandataire, le procédé comprenant :
une acquisition (102, 202, 302, 402) d'une demande de commande à distance reçue par l'application mandataire, la demande de commande à distance étant envoyée par une application dans un dispositif terminal d'un utilisateur à l'aide d'un protocole à architecture orientée services SOA ; et
une exécution (104, 208, 310, 414) d'une opération de commande correspondant à la demande de commande à distance,
dans lequel ladite exécution d'une opération de commande correspondant à la demande de commande à distance comprend :
un envoi (204, 306) de la demande de commande à distance vers un serveur à l'aide du protocole SOA ;
une réception (206, 308) d'un premier message de réponse de commande renvoyé par le serveur à l'aide du protocole SOA ; et
un envoi (208, 310) d'un signal de commande vers un actionneur correspondant sur la base du premier message de réponse de commande, amenant ainsi l'actionneur à exécuter une opération correspondant au signal de commande.

2. Procédé de commande à distance selon la revendication 1, comprenant en outre :
une acquisition (210, 312) d'un résultat d'exécution de l'actionneur, et un envoi, sur la base du résultat d'exécution et par l'intermédiaire de l'application mandataire, d'un second message de réponse de commande vers l'application dans le dispositif terminal de l'utilisateur à l'aide du protocole SOA.

3. Procédé de commande à distance selon la revendication 1, dans lequel ledit envoi de la demande de commande à distance vers un serveur à l'aide du protocole SOA comprend :
un envoi de la demande de commande à distance vers le serveur à l'aide du protocole SOA sur la base d'un réseau local de commande CAN ; ou
un envoi de la demande de commande à distance vers le serveur à l'aide du protocole SOA sur la base d'Éthernet.

4. Procédé de commande à distance selon la revendication 3, dans lequel ledit envoi de la demande de commande à distance vers le serveur à l'aide du protocole SOA basé sur un CAN comprend :
une encapsulation (404) de la demande de commande dans un ou plusieurs messages de demande CAN sur la base d'un protocole de communication CAN ; et
un envoi (406) des un ou plusieurs messages de demande CAN vers un module de communication de véhicule par l'intermédiaire d'un CAN, permettant ainsi aux un ou plusieurs messages de demande CAN d'être envoyés vers le serveur par le module de communication de véhicule.

5. Procédé de commande à distance selon la revendication 4, dans lequel ladite encapsulation de la demande de commande dans un ou plusieurs messages de demande CAN sur la base d'un protocole de communication CAN comprend :
une encapsulation de la demande de commande dans de premières données continues destinées à être traitées sur la base du protocole de communication CAN ; et
une mise en sous-paquets des premières données destinées à être traitées pour obtenir une pluralité de messages de demande CAN.

6. Procédé de commande à distance selon la revendication 5, dans lequel ledit envoi des messages de demande CAN vers un module de communication de véhicule par l'intermédiaire d'un CAN, permettant ainsi aux un messages de demande CAN d'être envoyés vers le serveur par le module de communication de véhicule, comprend :
un envoi des messages de demande CAN vers le module de communication de véhicule dans le véhicule en invoquant une interface CAN, amenant ainsi le module de communication de véhicule à envoyer les messages de demande CAN vers le serveur.

7. Procédé de commande à distance selon la revendication 1, dans lequel le premier message de réponse de commande comprend une pluralité de premiers messages de réponse CAN, et ledit envoi d'un signal de commande vers un actionneur correspondant sur la base du premier message de réponse de commande, amenant ainsi l'actionneur à exécuter une opération correspondant au signal de commande, comprend :
une mise en paquet (410) de la pluralité de premiers messages de réponse CAN pour obtenir de deuxièmes données continues destinées à être traitées ;
une extraction (412) du signal de commande à partir des deuxièmes données destinées à être traitées ; et
un envoi (414) du signal de commande vers l'actionneur correspondant aux informations d'identification contenues dans le signal de commande, amenant ainsi l'actionneur à exécuter l'opération correspondant au signal de commande.

8. Procédé de commande à distance selon la revendication 7, dans lequel les informations d'identification sont déterminées sur la base d'un objet cible et d'une fonction cible de la demande de commande à distance.

9. Procédé de commande à distance selon la revendication 2, dans lequel ledit envoi, basé sur le résultat d'exécution, d'un second message de réponse de commande vers le dispositif terminal de l'utilisateur par l'intermédiaire de l'application mandataire à l'aide du protocole SOA, comprend :
une génération (418) de troisièmes données continues destinées à être traitées à l'aide du résultat d'exécution ; et
une analyse (420) des troisièmes données destinées à être traitées pour obtenir le second message de réponse de commande, et un renvoi du second message de réponse de commande vers l'application mandataire, pour permettre au second message de réponse de commande d'être envoyé vers le dispositif terminal de l'utilisateur par l'application mandataire à l'aide du protocole SOA.

10. Procédé de commande à distance selon la revendication 1, comprenant en outre :
une détermination (304) du fait que, parmi des fonctions actuellement localement commandées, il existe une fonction identique à une fonction pour laquelle une prise de commande est demandée par la demande de commande à distance ; et
en l'absence d'une fonction identique, une exécution de l'étape d'envoi (306) de la demande de commande à distance au serveur à l'aide du protocole SOA.

11. Procédé de commande à distance selon la revendication 10, comprenant en outre :
un envoi (314) d'un message d'échec de demande de commande au dispositif terminal de l'utilisateur par l'intermédiaire de l'application mandataire à l'aide du protocole SOA, si, parmi les fonctions actuellement localement commandées, il existe une fonction identique à la fonction pour laquelle une prise de commande est demandée par la demande de commande à distance.

12. Appareil de commande à distance destiné à un véhicule, le véhicule étant doté d'une application mandataire, l'appareil de commande à distance comprenant :
un module d'acquisition de demande (602), conçu pour acquérir une demande de commande à distance reçue par l'application mandataire, la demande de commande à distance étant envoyée par une application dans un dispositif terminal d'un utilisateur à l'aide d'un protocole à architecture orientée services SOA ; et
un module d'exécution (604), conçu pour exécuter une opération de commande correspondant à la demande de commande à distance, dans lequel le module d'exécution comprend :
un sous-module d'envoi de demande (6042), conçu pour envoyer la demande de commande à distance vers un serveur à l'aide du protocole SOA ;
un sous-module de réception de message (6044), conçu pour recevoir un premier message de réponse de commande renvoyé par le serveur à l'aide du protocole SOA ; et
un sous-module d'envoi de signal (6046), conçu pour envoyer un signal de commande vers un actionneur correspondant sur la base du premier message de réponse de commande, pour amener l'actionneur à exécuter une opération correspondant au signal de commande.

13. Véhicule, comprenant une mémoire et un ou plusieurs programmes stockés dessus qui, lorsqu'ils sont exécutés par un ou plusieurs processeurs, mettent en oeuvre le procédé de commande à distance selon l'une quelconque des revendications 1 à 11.

14. Support de stockage lisible comprenant des instructions stockées dessus qui, lorsqu'elles sont exécutées par un processeur d'un véhicule, amènent le véhicule à mettre en oeuvre le procédé de commande à distance selon l'une quelconque des revendications 1 à 11.
